# EUROPEAN PATENT APPLICATION

(11) **EP 4 588 863 A1**
(43) Date of publication of application: **23.07.2025**
(21) Application number: 23894365.8
(22) Date of filing: 26.10.2023
(51) Int. Cl.: B65G 43/02, G01B 11/30

(54) **MONITORING METHOD AND MONITORING DEVICE**

(30) Priority: 22.11.2022 JP 2022186876
(71) Applicant: JFE Steel Corporation, Tokyo 100-0011 (JP)
(72) Inventor: ENOEDA Seiji, Tokyo 100-0011 (JP); NISHINA Yoshiaki, Tokyo 100-0011 (JP); YAMAHIRA Naoshi, Tokyo 100-0011 (JP)
(74) Representative: Scott, Stephen John
(86) International application number: PCT/JP2023/038750
(87) International publication number: WO 2024/111353

(57) **Abstract**

Provided are a monitoring method and a monitoring device that can monitor both meandering and edge fraying of a belt without applying special processing to the belt. The monitoring method is a monitoring method of monitoring a belt driven in a direction of travel by a drive means, the monitoring method including: a surface shape measurement step (S1) of measuring a surface shape of the belt; and a determination step (S2 to S9) of identifying positions of both end portions in a width direction of the belt at a measurement location from data on the surface shape measured in the surface shape measurement step, and determining whether meandering and edge fraying of the belt are present based on the identified positions of both the end portions in the width direction of the belt.

## Description

### TECHNICAL FIELD

The present disclosure relates to a monitoring method and a monitoring device. The present disclosure relates in particular to a monitoring method and a monitoring device that determine whether meandering or edge fraying of a belt driven in a direction of travel by a drive means is present.

### BACKGROUND

Belt conveyors with a conveyor belt (as an example of a belt) wrapped around a pair of pulleys serving as a driving means are known as transport devices for transporting raw materials or the like. In belt conveyors, meandering of the conveyor belt may occur due to long periods of operation, and damage to the end portions of the belt (hereinafter, also referred to as "edge fraying") may occur when the end portions of the conveyor belt comes into contact with a support frame. The condition of the conveyor belt must be monitored so as to prevent breakage of the conveyor belt due to the edge fraying.

As a method of monitoring the meandering or the edge fraying of a conveyor belt, for example, Patent Literature (PTL) 1 describes a method of capturing an image of a conveyor belt with an imaging device and monitoring the meandering of the conveyor belt based on captured image data. Patent Literature (PTL) 2 also describes a method of measuring the unevenness of a surface of a conveyor belt by the light-sectioning method using a line laser and detecting damage in edge portions. According to the methods of PTL1 and PTL2, however, either the meandering or the edge fraying of the conveyor belt is monitored, but both the meandering and the edge fraying cannot be monitored at the same time.

Here, as a method of detecting both the meandering and the edge fraying of a conveyor belt, Patent Literature (PTL) 3, for example, describes a method of emitting light onto the conveyor belt and detecting a defect of the transport belt based on the amount of light received by a light receiving unit.

### CITATION LIST

### Patent Literatures

PTL 1: JP 2018-115054 A
PTL 2: JP 2017-032346 A
PTL 3: JP 2020-132433 A

### SUMMARY

### (Technical Problem)

Although the method of PTL 3 can detect both the meandering and the edge fraying of the conveyor belt, it requires an edge seal portion containing a luminous agent to be disposed on edge portions of the conveyor belt. This makes the configuration of the conveyor belt more complicated and costly.

In view of such circumstances, it would be helpful to provide a monitoring method and a monitoring device that can monitor both the meandering and the edge fraying of a belt without applying special processing to the belt.

### (Solution to Problem)

(1) A monitoring method according to an embodiment of the present disclosure is
   a monitoring method of monitoring a belt driven in a direction of travel by a drive means, the monitoring method including:
   a surface shape measurement step of measuring a surface shape of the belt; and
   a determination step of identifying positions of both end portions in a width direction of the belt at a measurement location from data on the surface shape measured in the surface shape measurement step, and determining whether meandering and edge fraying of the belt are present based on the identified positions of both the end portions in the width direction of the belt.
(2) As an embodiment of the present disclosure, in (1),
   in the surface shape measurement step, a line laser is emitted in the width direction of the belt so that at least both the end portions in the width direction of the belt are included in an extent of emission, and the surface shape of the belt is measured.
(3) As an embodiment of the present disclosure, in (1) or (2),
   in the surface shape measurement step, the surface shape of the belt is measured while the belt is in operation, and data on the measured surface shape are synthesized so as to generate data for an entire length of the belt.
(4) As an embodiment of the present disclosure, in any one of (1) to (3),
   in the determination step, a width of the belt is calculated from the positions of both the end portions in the width direction of the belt at the measurement location, and whether the edge fraying of the belt is present is determined by comparing the calculated width with a width stored in advance.
(5) As an embodiment of the present disclosure, in any one of (1) to (4),
   in the determination step, in a case in which a calculated width and a width stored in advance are same, a center position of the belt is calculated from the positions of both the end portions in the width direction of the belt at the measurement location, and by comparing the calculated center position with a center position stored in advance, whether the meandering of the belt is present is determined.
(6) As an embodiment of the present disclosure, in any one of (1) to (5),
   in the determination step, in a case in which a calculated width and a width stored in advance are different, locations in which the calculated width and the width stored in advance are same are identified from locations before and after the measurement location in the direction of travel of the belt, and a center position of the belt at the measurement location is estimated from positions of both end portions in the width direction of the belt at the identified locations, and by comparing the estimated center position with a center position stored in advance, whether the meandering of the belt is present is determined.
(7) A monitoring device according to an embodiment of the present disclosure is
   a monitoring device that monitors a belt driven in a direction of travel by a drive means, the monitoring device including:
   a measurement unit configured to measure a surface shape of the belt; and
   an arithmetic unit configured to identify positions of both end portions in a width direction of the belt at a measurement location from data on the surface shape measured by the measurement unit, and to determine whether meandering and edge fraying of the belt are present based on the identified positions of both the end portions in the width direction of the belt.

### (Advantageous Effect)

According to the present disclosure, the monitoring method and the monitoring device that can monitor both the meandering and the edge fraying of a belt without applying special processing to the belt are provided.

### BRIEF DESCRIPTION OF THE DRAWINGS

In the accompanying drawings:
FIG. 1 is a view illustrating an example configuration of a monitoring device according to an embodiment of the present disclosure;
FIG. 2 is a side view illustrating a belt conveyor monitored by the monitoring device of FIG. 1;
FIG. 3 is a plan view illustrating the belt conveyor monitored by the monitoring device of FIG. 1;
FIG. 4 is a view illustrating surface shape data for a conveyor belt;
FIG. 5 is a flowchart illustrating example processing of a monitoring method according to an embodiment of the present disclosure;
FIG. 6 is a view illustrating calculation of the amount of meandering; and
FIG. 7A is a view illustrating a method of calculating the amount of meandering and edge fraying, FIG. 7B is a view illustrating the method of calculating the amount of meandering and the edge fraying, FIG. 7C is a view illustrating the method of calculating the amount of meandering and the edge fraying, FIG. 7D is a view illustrating the method of calculating the amount of meandering and the edge fraying, and FIG. 7E is a view illustrating the method of calculating the amount of meandering and the edge fraying.

### DETAILED DESCRIPTION

Hereinafter, a monitoring method and a monitoring device according to an embodiment of the present disclosure will be described with reference to the drawings. In the figures, the same or corresponding portions are denoted with the same reference signs. In the description of the present embodiment, description of the same or corresponding portions will be omitted or simplified as appropriate.

### <Monitoring Device>

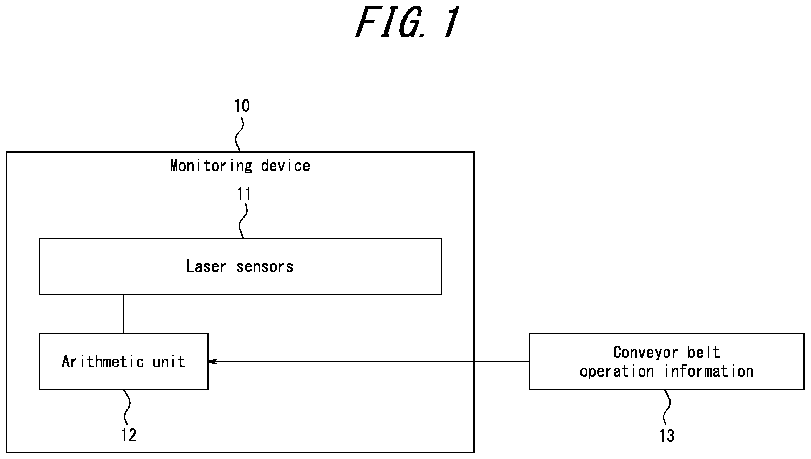

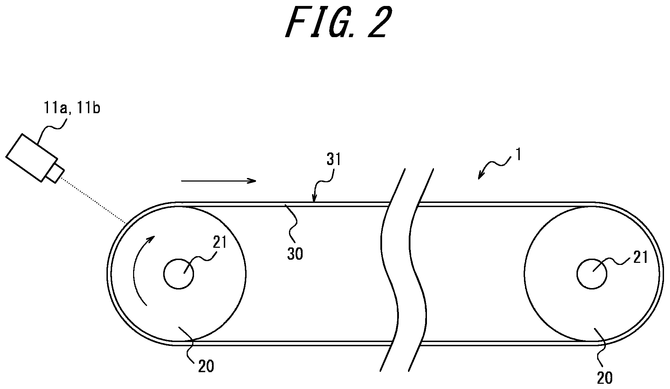

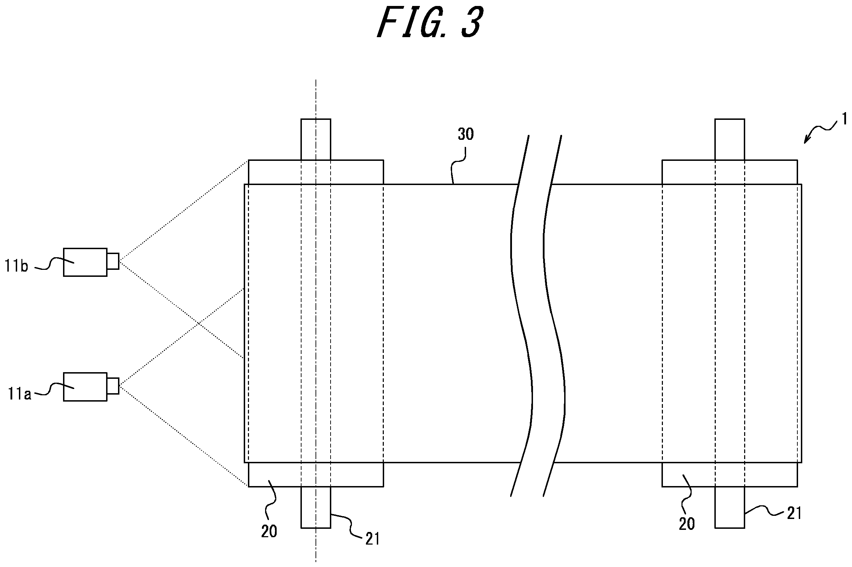

FIG. 1 illustrates an example configuration of a monitoring device 10 according to an embodiment of the present disclosure. FIG. 2 is a side view illustrating a belt conveyor 1 monitored by the monitoring device 10 of FIG. 1. FIG. 3 is a plan view illustrating the belt conveyor 1 monitored by the monitoring device 10 of FIG. 1. As illustrated in FIG. 2, the monitoring device 10 measures a surface shape of a conveyor belt 30 wrapped around pulleys 20 and monitors meandering and edge fraying of the conveyor belt 30. Here, the pulleys 20 are an example of a drive means. The conveyor belt 30 is an example of a belt. The meandering refers to a state in which a center in a width direction of the conveyor belt 30 is misaligned from a center position according to specifications. The edge fraying refers to damage in end portions of the conveyor belt 30.

The monitoring device 10 is a device that monitors a belt driven in a direction of travel by the drive means. Although the belt is not limited to the conveyor belt 30, it is described as the conveyor belt 30 driven by the pulleys 20 in the present embodiment. Here, the direction of travel is a direction in which the belt moves by driving force from the drive means. In the present embodiment, the direction of travel will also be referred to as a direction of transport. The direction of transport is a direction in which transported items placed on a surface 31 of the conveyor belt 30 in operation move.

In the belt conveyor 1, it is also preferable for the thickness of the conveyor belt 30 to be managed so as to prevent breakage of the conveyor belt 30. The thickness of the conveyor belt 30 can be computed from the surface shape measured by the monitoring device 10 and managed. Here, the surface shape is a shape of the surface 31 of the conveyor belt 30 including its unevenness. For example, a portion on the surface 31 of the conveyor belt 30 that is depressed compared to its surroundings can indicate that this portion of the conveyor belt 30 is thinner than the surroundings. In a case in which the thickness of the conveyor belt 30 is zero, it can indicate that there is damage, such as a broken hole, in this portion.

As illustrated in FIG. 1, the monitoring device 10 according to the present embodiment includes laser sensors 11 and an arithmetic unit 12. The monitoring device 10 measures the surface shape of the conveyor belt 30 and monitors the meandering and the edge fraying, by cooperative operation of the laser sensors 11 and the arithmetic unit 12. The laser sensors 11 and the arithmetic unit 12 may be connected by a network, such as a Local Area Network (LAN), so as to be able to transmit and receive information (measurement data) obtained from measurement. The arithmetic unit 12 may also acquire conveyor belt operation information 13 via the network. Details of the components of the monitoring device 10 will be described later.

As illustrated in FIG. 2, the conveyor belt 30, which is an object to be measured by the monitoring device 10, is wrapped around the pair of pulleys 20. When the pulleys 20 rotate, the conveyor belt 30 moves, thereby being able to move transported items placed on the surface 31. Here, the surface 31 of the conveyor belt 30 is a surface (outer surface) of the conveyor belt 30 that is opposite to a surface (inner surface) located closer to the pulleys 20.

### <Laser Sensors>

The monitoring device 10 includes a plurality of laser sensors 11. As illustrated in FIG. 2 and FIG. 3, the plurality of laser sensors 11 may be indicated as a laser sensor 11a and a laser sensor 11b so that they can be distinguished. In the present embodiment, the laser sensors 11 are a device using the laser light-sectioning method. The laser sensors 11 can measure the surface shape of the conveyor belt 30 while being out of contact with the conveyor belt 30, by emitting a line laser. That is, the laser sensors 11 measure the distance to the surface 31 of the conveyor belt 30, by emitting a line laser and receiving its reflected light with an optical sensor. Then, based on information on the distance, the laser sensors 11 can measure the surface shape at the surface 31 of the conveyor belt 30. Here, the line lasers are an example of a measurement device. The measurement device is not limited to the laser sensors 11 and may be any device that measures the surface shape of the conveyor belt 30. In another example, the measurement device may be configured by a camera or the like.

It is preferable for the laser sensors 11 to make a measurement while the pulleys 20 and the conveyor belt 30 are rotating. As illustrated in FIG. 2 and FIG. 3, in the present embodiment, the two laser sensors 11a and 11b are arranged side by side in the width direction of a pulley 20 (in other words, in the width direction of conveyor belt 30) so that the entire width (entire length in the width direction) of the pulley 20 can be measured. The laser beams (line lasers) from the laser sensors 11a and 11b extend in the width direction of the conveyor belt 30, and the respective extents of the laser beams emitted overlap each other by several mm to several tens of mm, so as to avoid creating areas that are left unmeasured. Overlapping end portions and the opposite end portions in end portions of the line lasers extend to outer sides of end portions of the conveyor belt 30 in the width direction on the pulley 20. Here, in a case in which only one laser sensor 11 can measure an entire width of the conveyor belt 30, only one laser sensor 11 needs to be arranged.

In the present embodiment, by the plurality of laser sensors 11a and 11b each emitting a laser beam onto the conveyor belt 30, the surface shape of the entire width of the conveyor belt 30 can be measured. The laser sensors 11 may be disposed at positions from which they can emit a laser beam onto the conveyor belt 30 from diagonally above the pulley 20, so that the surface shape of the conveyor belt 30 can be measured in a portion in which the conveyor belt 30 contacts the pulley 20. At this time, in order to accurately measure a thickness direction of the conveyor belt 30, the laser sensors 11 are installed so that directions in which the laser beams are emitted pass through a center 21 of the pulley 20. Here, the positions of the laser sensors 11 are not limited to diagonally above the pulley 20. For example, when viewed from the side as illustrated in FIG. 2, the laser sensors 11 can be arranged at any position as long as the laser beams are emitted between 6 o'clock and 12 o'clock on the pulley 20 located closer to the laser sensors 11 (on the left half side of the pulley 20 on the drawing). By measuring the surface shape of the conveyor belt 30 in the portion in which the conveyor belt contacts the pulley 20, the conveyor belt 30 does not swing up and down and can be measured in a stable posture. In this way, the laser sensors 11 can make a measurement and obtain information on the surface shape of the conveyor belt 30 including its unevenness. Because the laser sensors 11 are a non-contact type, it is possible to measure the surface shape of the conveyor belt 30 while the conveyor belt 30 is in operation.

### <Arithmetic Unit>

The arithmetic unit 12 computes the surface shape of the conveyor belt 30, based on measurement data for the surface of the conveyor belt 30 obtained by measurement using the laser sensors 11 and on conveyor belt operation information 13 that is acquired as necessary (this corresponds to a surface shape measurement step). Here, the conveyor belt operation information 13 includes information indicating that the conveyor belt 30 is in operation. Furthermore, arithmetic operations executed by the arithmetic unit 12 include arithmetic operations to extract information only while the conveyor belt 30 is in operation from information regarding the surface shape obtained from measurement. The arithmetic unit 12 generates data for the entire length of the conveyor belt 30, by synthesizing data on the surface shape of the conveyor belt 30 while it is in operation (driving).

The arithmetic unit 12 identifies positions of both end portions in the width direction of the conveyor belt 30 at a measurement location from the obtained data on the surface shape of the conveyor belt 30. Based on the identified positions of both the end portions in the width direction of the conveyor belt 30, the arithmetic unit 12 determines whether the meandering and the edge fraying of the conveyor belt 30 are present (this corresponds to a determination step).

The arithmetic unit 12 includes a processor that executes arithmetic operations and a memory unit that stores data (e.g., information on the surface shape) to be used in the arithmetic operations. The arithmetic unit 12 may be, for example, a computer. The processor is, for example, a general-purpose processor or a dedicated processor that is dedicated to specific processing, but is not limited to these and can be any processor. The memory unit includes one or more memories. The memories can be, for example, a semiconductor memory, a magnetic memory, an optical memory, or the like, but is not limited to these and can be any memories.

### <Monitoring Method>

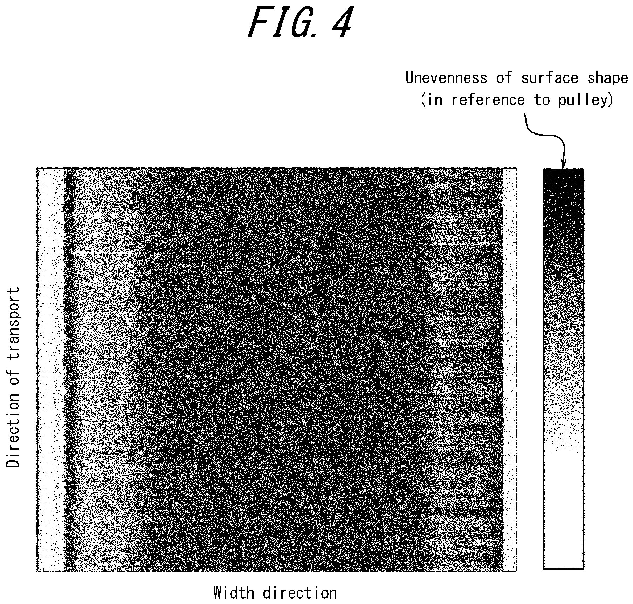

In the following, the monitoring method by the conveyor belt 30, including a specific method of determining the meandering and the edge fraying of the conveyor belt 30 by the arithmetic unit 12, will be described with reference to FIG. 4 through FIG. 7E. FIG. 4 illustrates surface shape data for the conveyor belt 30. The surface shape is indicated by the height of a surface position in a height direction of the conveyor belt 30, with a radial direction from the center 21 of a cylindrically-shaped pulley 20 being defined as the height direction. In FIG. 4, black portions, such as near the center of the width direction, indicate that the surface position of these portions are higher than white portions.

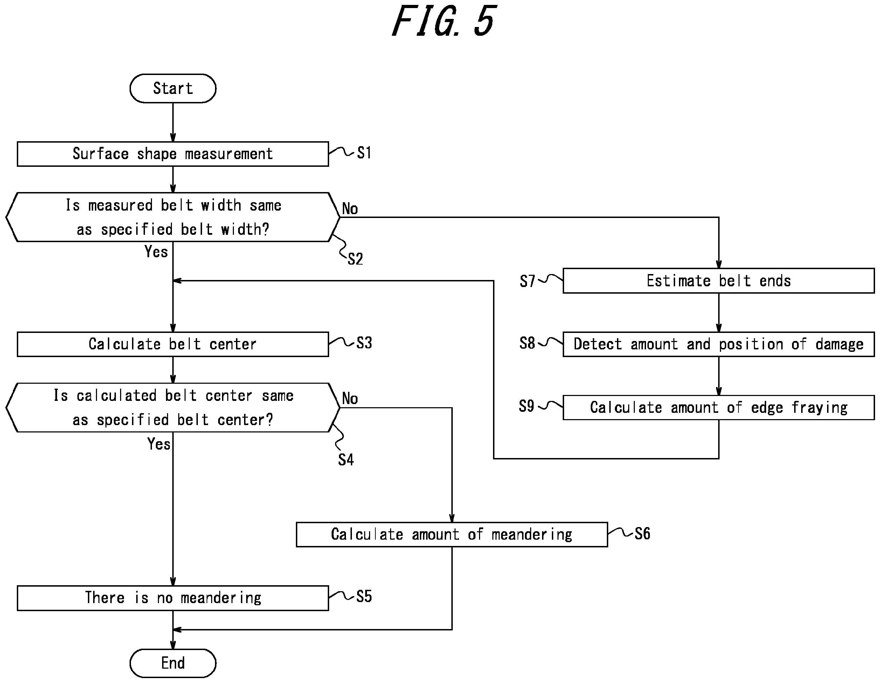

FIG. 5 is a flowchart illustrating example processing of the monitoring method executed by the monitoring device 10 according to the present embodiment.

The arithmetic unit 12 first executes measurement of the surface shape of the conveyor belt 30 (Step S1). In the surface shape measurement in this step, as described above, the arithmetic unit 12 measures the surface shape of the conveyor belt 30 while the conveyor belt 30 is in operation, and generates data for the entire length of the conveyor belt 30 by synthesizing data on the measured surface shape.

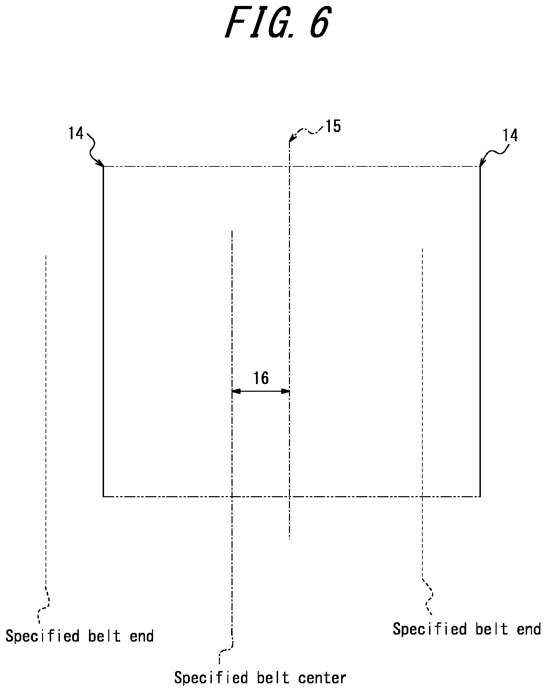

The arithmetic unit 12 identifies positions of both end portions in the width direction of the conveyor belt 30 from the data for the entire length of the conveyor belt 30. The arithmetic unit 12 calculates the width of the conveyor belt 30 from the identified positions of both the end portions 14 (refer to FIG. 6) in the width direction. The calculated width of the conveyor belt 30 will hereinafter be referred to as a "measured belt width." The arithmetic unit 12 retrieves a "specified belt width," which is a width stored in advance in the memory unit. The specified belt width is specification-compliant width of conveyor belt 30, and this is a proper width of the conveyor belt 30 without damage (edge fraying). The arithmetic unit 12 compares the measured belt width with the specified belt width, so as to determine whether the edge fraying of the conveyor belt 30 is present (Step S2).

In a case in which the measured belt width is the same as the specified belt width (Yes in Step S2), the arithmetic unit 12 determines that edge fraying is absent in the measured conveyor belt 30. In a case in which the measured belt width is different from the specified belt width (No in Step S2), that is, in a case in which the width of the conveyor belt 30 is shorter than the specifications due to damage, the arithmetic unit 12 determines that edge fraying is present in the measured conveyor belt 30. Hereinafter, the absence of edge fraying may be described as "there is no edge fraying." The presence of edge fraying may be described as "there is edge fraying."

When determining that "there is no edge fraying" (Yes in Step S2), the arithmetic unit 12 performs processing of Step S3 to Step S6 as follows, so as to detect the meandering of the conveyor belt 30. As illustrated in FIG. 6, the arithmetic unit 12 calculates the center position in the width direction of the conveyor belt 30 from the calculated positions of both the end portions 14 in the width direction of the conveyor belt 30 (Step S3). Hereinafter, the calculated center position in the width direction of the conveyor belt 30 will be referred to as a calculated belt center 15.

Here, a "specified belt center," which is the center position in the width direction of the conveyor belt 30 according to the specifications, corresponds to the center in the width direction of the pulley 20 (pulley center position). The pulley 20 is fixed to a stand. The pulley center position therefore always remains the same. Furthermore, the positions of the end portions (specified belt ends) of the conveyor belt 30 according to the specifications that correspond to the specified belt center always remain the same. Accordingly, by comparing the calculated belt center 15 with the specified belt center stored in advance in the memory unit, the presence of meandering of the conveyor belt 30 can be determined. The arithmetic unit 12 compares the calculated belt center 15 with the specified belt center, so as to determine whether the meandering of the conveyor belt 30 is present (Step S4).

In a case in which the calculated belt center 15 is the same as the specified belt center (Yes in Step S4), the arithmetic unit 12 determines that meandering is absent in the measured conveyor belt 30 (Step S5). In a case in which the calculated belt center 15 is misaligned from the specified belt center (No in Step S4), the arithmetic unit 12 determines that meandering is present in the measured conveyor belt 30. Hereinafter, the absence of meandering may be described as "there is no meandering." The presence of meandering may be described as "there is meandering."

When determining that "there is meandering" (No in Step S4), the arithmetic unit 12 calculates the amount of meandering 16 (refer to FIG. 6) of the conveyor belt 30 from the amount of misalignment of the center position (Step S6).

When determining that "there is edge fraying" (No in Step S2), the arithmetic unit 12 executes processing of Step S7 to Step S9, so as to calculate the amount of edge fraying, and executes processing of Step S3 to Step S6 as follows, so as to detect the meandering of the conveyor belt 30. Here, the processing of Step S8 and Step S9 and the processing of Step S3 to Step S6 may be executed in parallel.

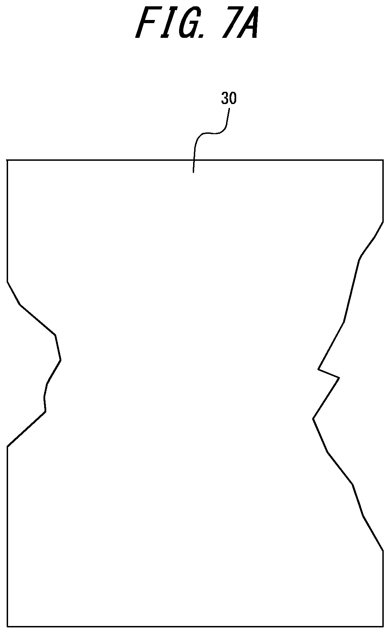

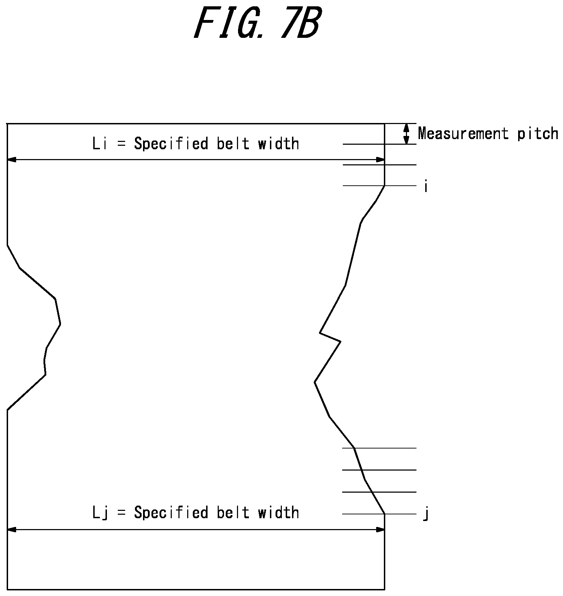

FIG. 7A illustrates the conveyor belt 30 with edge fraying. Because the end portions are damaged at the measurement location, the arithmetic unit 12 cannot calculate the belt center from the positions of both the end portions in the width direction of the conveyor belt 30. Accordingly, the arithmetic unit 12 identifies locations in which the specified belt width and the measured belt width are the same from locations before and after the measurement location with edge fraying in the direction of travel of the conveyor belt 30. Specifically, as illustrated in FIG. 7B, it identifies the locations in which the specified belt width and the measured belt width are the same, while moving at a certain measurement pitch in a longitudinal direction (positive and negative directions along the direction of travel) of the conveyor belt 30. The measurement pitch may be set to a value within the range of 0.1 mm to 0.5 mm, for example. From the accumulated surface shape data for the conveyor belt 30, the arithmetic unit 12 identifies positions that are closest to the measurement location with edge fraying and in which the specified belt width and the measured belt width are the same. In FIG. 7B, the positions identified (identified positions) are indicated by "i" and "j."

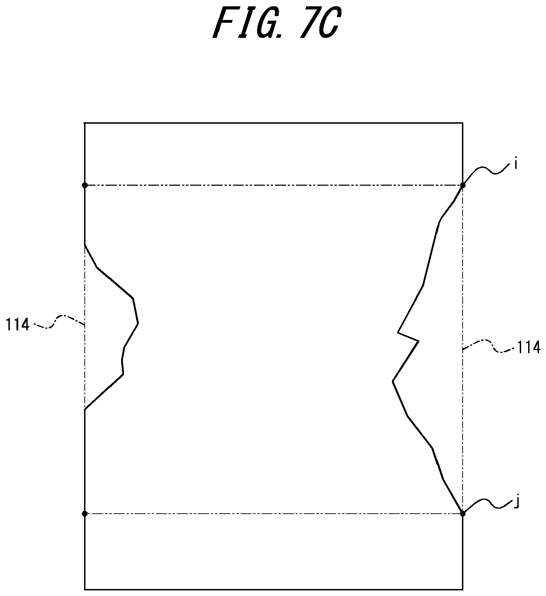

The arithmetic unit 12 estimates both the end portions (belt ends) in the width direction of the conveyor belt 30 (Step S7). As illustrated in FIG. 7C, the arithmetic unit 12 draws an estimated line connecting end portions at the identified position "i" and an estimated line connecting end portions at the identified position "j" between both sides in the width direction, so as to obtain estimated belt ends 114.

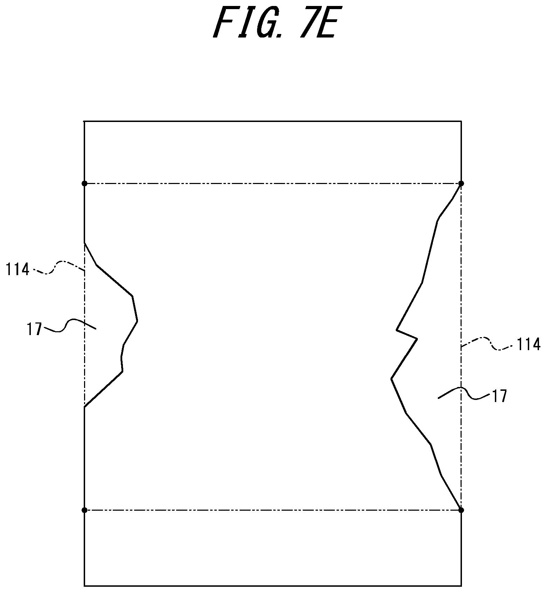

The arithmetic unit 12 detects the amount and the position of damage (Step S8) and calculates the amount of edge fraying (Step S9). As illustrated in FIG. 7E, the arithmetic unit 12 determines the areas surrounded (sandwiched) by the estimated belt ends 114 and the extents in which the thickness of the conveyor belt 30 is zero in the surface shape data, as damaged portions 17. The arithmetic unit 12 further identifies the positions and the sizes of the damaged portions 17 and calculates the amount of edge fraying.

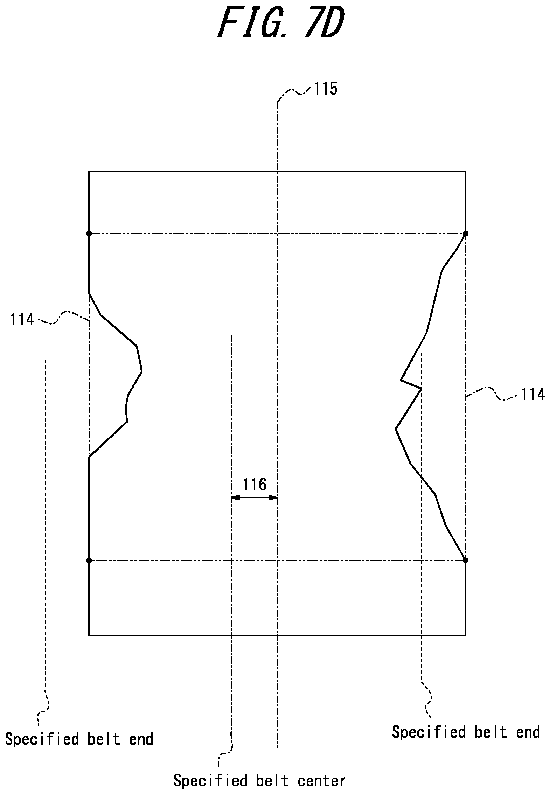

The arithmetic unit 12 also calculates the center position in the width direction of the conveyor belt 30 (Step S3). When determining that "there is edge fraying," the arithmetic unit 12 calculates the calculated belt center 115 from the estimated belt ends 114 on both sides, as illustrated in FIG. 7D.

The arithmetic unit 12 compares the calculated belt center 115 with the specified belt center, so as to determine whether the meandering of the conveyor belt 30 is present (Step S4).

In a case in which the calculated belt center 115 is the same as the specified belt center (Yes in Step S4), the arithmetic unit 12 determines that meandering is absent in the measured conveyor belt 30 (Step S5). In a case in which the calculated belt center 115 is misaligned from the specified belt center (No in Step S4), the arithmetic unit 12 determines that meandering is present in the measured conveyor belt 30.

When determining that "there is meandering" (No in Step S4), the arithmetic unit 12 calculates the amount of meandering 116 (refer to FIG. 7D) of the conveyor belt 30 from the amount of misalignment of the center position (Step S6).

As described above, the monitoring method executed by the monitoring device 10 according to the present embodiment includes the surface shape measurement step and the determination step. In the surface shape measurement step, which corresponds to the aforementioned Step S1, a line laser is emitted in the width direction of the belt to ensure that both end portions in the width direction of the belt are included in the emission range, and the surface shape of the belt is measured. In the determination step, which corresponds to the aforementioned Step S2 to Step S9, the positions of both the end portions in the width direction of the belt at the measurement location are identified from data on the surface shape measured in the surface shape measurement step, and whether the meandering or the edge fraying of the belt are present is determined based on the identified positions of both the end portions in the width direction of the belt.

### <Belt Management Method>

Using the above monitoring method, the conveyor belt 30 is managed (monitored) based on the computed surface shape of the conveyor belt 30. When determining that meandering or edge fraying is present, the monitoring device 10 can inform an operator of a fault of the conveyor belt 30 or stop the conveyor belt 30. Based on the computed surface shape of the conveyor belt 30, the monitoring device 10 may further determine whether the thickness of the conveyor belt 30 is sufficient. In this way, a defect (meandering, edge fraying, or the like) of the conveyor belt 30 can be detected, and the fault can be addressed at an early stage.

As described above, with the above configuration, the monitoring method and the monitoring device 10 according to the present embodiment can monitor both the meandering and the edge fraying of the belt without applying special processing to the belt. Furthermore, by determining whether the meandering and the edge fraying of the belt are present, problems, such as breakage of the belt, can be prevented.

Although an embodiment of the present disclosure has been described based on the drawings and examples, it is to be noted that various modifications and changes may be easily made by those skilled in the art based on the present disclosure. Accordingly, such modifications and changes are included within the scope of the present disclosure. For example, functions or the like included in each component, each step (process), or the like can be rearranged without logical inconsistency, and a plurality of components, steps, or the like can be combined into one or divided. An embodiment according to the present disclosure can be implemented as a program that is executed by a processor included in a device, or as a storage medium in which the program is recorded. It is to be understood that these are included within the scope of present disclosure.

In the above embodiment, it is explained that there are two laser sensors 11, but there can be three or more. By increasing the number of laser sensors 11, an even wider belt can be handled.

### REFERENCE SIGN LIST

- 1: Belt conveyor
- 10: Monitoring device
- 11, 11a, 11b: Laser sensor
- 12: Arithmetic unit
- 13: Conveyor belt operation information
- 14: Both end portions in width direction
- 15: Calculated belt center
- 16: Amount of meandering
- 17: Damaged portion
- 20: Pulley
- 21: Center of pulley
- 30: Conveyor belt
- 31: Surface of conveyor belt
- 114: Estimated belt end
- 115: Calculated belt center
- 116: Amount of meandering

## Claims

1. A monitoring method of monitoring a belt driven in a direction of travel by a drive means, the monitoring method comprising:
a surface shape measurement step of measuring a surface shape of the belt; and
a determination step of identifying positions of both end portions in a width direction of the belt at a measurement location from data on the surface shape measured in the surface shape measurement step, and determining whether meandering and edge fraying of the belt are present based on the identified positions of both the end portions in the width direction of the belt.

2. The monitoring method according to claim 1, wherein in the surface shape measurement step, a line laser is emitted in the width direction of the belt so that at least both the end portions in the width direction of the belt are included in an extent of emission, and the surface shape of the belt is measured.

3. The monitoring method according to claim 1 or 2, wherein in the surface shape measurement step, the surface shape of the belt is measured while the belt is in operation, and data on the measured surface shape are synthesized so as to generate data for an entire length of the belt.

4. The monitoring method according to any one of claims 1 to 3, wherein in the determination step, a width of the belt is calculated from the positions of both the end portions in the width direction of the belt at the measurement location, and whether the edge fraying of the belt is present is determined by comparing the calculated width with a width stored in advance.

5. The monitoring method according to any one of claims 1 to 4, wherein in the determination step, in a case in which a calculated width and a width stored in advance are same, a center position of the belt is calculated from the positions of both the end portions in the width direction of the belt at the measurement location, and by comparing the calculated center position with a center position stored in advance, whether the meandering of the belt is present is determined.

6. The monitoring method according to any one of claims 1 to 5, wherein in the determination step, in a case in which a calculated width and a width stored in advance are different, locations in which the calculated width and the width stored in advance are same are identified from locations before and after the measurement location in the direction of travel of the belt, and a center position of the belt at the measurement location is estimated from positions of both end portions in the width direction of the belt at the identified locations, and by comparing the estimated center position with a center position stored in advance, whether the meandering of the belt is present is determined.

7. A monitoring device that monitors a belt driven in a direction of travel by a drive means, the monitoring device comprising:
a measurement unit configured to measure a surface shape of the belt; and
an arithmetic unit configured to identify positions of both end portions in a width direction of the belt at a measurement location from data on the surface shape measured by the measurement unit, and to determine whether meandering and edge fraying of the belt are present based on the identified positions of both the end portions in the width direction of the belt.
